# FASCICULE DE BREVET EUROPEEN

(11) **EP 1 408 603 B1**
(45) Date de publication et mention de la délivrance du brevet: **08.11.2017**
(21) Numéro de dépôt: 03292191.8
(22) Date de dépôt: 05.09.2003
(51) Int. Cl.: H02K 29/08, B62D 5/04, B62D 15/02, G01P 3/487

(54) **Dispositif de pilotage d'un moteur à commutation electronique au moyen d'un signal de position**
Vorrichtung zur Steuerung eines elektronisch kommutierten Motors mittels eines Positionssignals
Device for controlling an electronically commutated motor by means of a position signal

(30) Priorité: 27.09.2002 FR 0212014
(43) Date de publication de la demande: 14.04.2004
(73) Titulaire: S.N.R. ROULEMENTS, 74010 Annecy Cédex (FR)
(72) Inventeur: Desbiolles, Pascal, 74570 Thorens-Glieres (FR); Beauprez, Jean-Michel, 74270 Mathounex sous Clermont (FR)
(74) Mandataire: Sayettat, Julien Christian

(56) Documents cités:
- DE-C- 19 748 996
- FR-A- 2 794 504
- US-A- 4 732 494
- US-A- 5 184 069
- US-A1- 2002 112 913
- US-B1- 6 243 023
- US-B1- 6 352 370
- PATENT ABSTRACTS OF JAPAN vol. 2000, no. 26, 1 juillet 2002 (2002-07-01) -& JP 2001 264112 A (HITACHI METALS LTD), 26 septembre 2001 (2001-09-26)
- PATENT ABSTRACTS OF JAPAN vol. 9, no. 147 (E-323), 21 juin 1985 (1985-06-21) -& JP 60 028760 A (TAKAHASHI YOSHITERU), 13 février 1985 (1985-02-13)

## Description

L'invention concerne un dispositif de pilotage d'un moteur électrique de type à commutation électronique comprenant N paires de pôles et P phases, un roulement et un moteur équipé d'un tel dispositif, ainsi qu'un procédé de pilotage d'un tel moteur.

Du fait de leur puissance massique importante, les moteurs à commutation électronique, ou moteurs brushless, peuvent être utilisés pour commander la rotation d'un organe mécanique dans un grand nombre d'applications.

Un exemple particulier d'une telle application est l'assistance à la direction des véhicules automobiles par un système de direction assistée de type électrique.

Dans le cadre de son application, il est nécessaire de piloter précisément la commutation du courant dans les phases de ces moteurs afin d'obtenir un couple qui soit optimal.

Il est connu d'utiliser un dispositif de pilotage comprenant un capteur pourvu de P éléments sensibles disposés en regard d'un codeur comportant N paires de pôles, ledit codeur étant mis en rotation par le moteur.

Dans le cas d'un moteur brushless DC à trois phases, en prévoyant que les trois éléments sensibles soient déphasés l'un par rapport à l'autre d'un angle mécanique permettant de fournir trois signaux électriques de commutation qui sont déphasés de 120° électriques, il est possible de piloter la commutation entre les phases du moteur.

Toutefois, ce type de solution ne permet qu'une précision limitée dans la détermination des instants de commutation du courant dans les phases.

En effet, dans les dispositifs de pilotage connus, la précision des signaux de commutation est fonction des tolérances de réalisation et d'aimantation des codeurs magnétiques et de positionnement des éléments sensibles sur leur support, ces deux facteurs ne pouvant être obtenus qu'avec des tolérances non nulles.

Par conséquent, du fait de ces tolérances, la précision du déphasage entre les signaux de commutation n'est pas exactement de 120° électrique, ce qui induit des modulations indésirables du couple fourni par le moteur.

Pour résoudre ce problème, on a proposé des dispositifs de pilotage comprenant un deuxième capteur de type « resolver » qui permet de connaître la position absolue du rotor afin d'améliorer la précision de pilotage du moteur. Toutefois, ce type de solutions n'est pas satisfaisant en ce qu'il induit des contraintes d'intégration mécanique du fait de l'encombrement des capteurs de type « resolver ». De plus, s'ajoute la difficulté à transporter les signaux analogiques issus du resolver vers un démodulateur calculant la position absolue du rotor. Le document "US 6 243 023 B1 " décrit un dispositif de pilotage d'un moteur électrique de type à commutation électronique selon le préambule de la revendication 1. Pour pallier notamment cet inconvénient, l'invention propose un dispositif de pilotage qui utilise un signal de position absolue du rotor pour piloter la commutation des courants dans les enroulements de phase du moteur, ladite position absolue étant obtenue avec un seul ensemble capteur / codeur.

A cet effet, et selon un premier aspect, l'invention propose un dispositif de pilotage d'un moteur électrique de type à commutation électronique selon la revendication 1. Suivant un mode de réalisation, le dispositif comprend en outre :
- une troisième piste multipolaire comprenant N paires de pôles ;
- un deuxième capteur fixe comprenant P éléments sensibles, lesdits éléments sensibles étant agencés en regard et à distance d'entrefer de la troisième piste multipolaire de sorte à délivrer des signaux U, V, W de commutation des courants dans les enroulements de phase.
Selon un deuxième aspect, l'invention propose un roulement du type comprenant une bague fixe destinée à être associée à un organe fixe, une bague tournante destinée à être mise en rotation par le rotor du moteur électrique et des corps roulants disposés entre lesdites bagues, dans lequel au moins un codeur d'un tel dispositif de pilotage est associé à la bague tournante. Selon un troisième aspect, l'invention propose un moteur à commutation électronique équipé d'un tel dispositif de pilotage.
Selon un quatrième aspect, l'invention propose un procédé de pilotage d'un tel moteur, qui comprend les étapes successives suivantes :
- alimentation du moteur selon une séquence temporelle préétablie de sorte à permettre la mise en rotation du rotor et donc celle du codeur ;
- détection d'une première impulsion top tour ;
- détermination de l'état de la logique de commutation correspondant à la position angulaire de ladite impulsion ;
- envoi au circuit de commutation des signaux de commutation correspondant à l'état déterminé ;
- détermination itérative des états de la logique de commutation ultérieurs à partir des signaux de position A, B ;
- envoi au circuit de commutation des signaux de commutation correspondant aux états déterminés.

Selon une réalisation, le procédé prévoit l'utilisation initiale des signaux de commutation U, V, W pour la détermination des états de la logique de commutation entre les phases du moteur.

D'autres objets et avantages de l'invention apparaîtront au cours de la description qui suit, faite en référence aux dessins annexés, dans lesquels :
- la figure 1 est une vue de face d'un codeur comprenant une piste multipolaire principale et une piste multipolaire top tour ;
- la figure 2 est une vue de face d'un codeur comprenant uniquement une troisième piste multipolaire ;
- la figure 3 est une vue de face d'un codeur comprenant une piste multipolaire principale, une piste multipolaire top tour et une troisième piste multipolaire ;
- la figure 4 est une vue partielle et en coupe longitudinale d'un roulement pourvu d'un codeur tel que celui représenté sur les figures 1 ou 3 ;
- les figures 5 à 10 sont des vues partielles et en coupe longitudinale d'un roulement pourvu de deux codeurs tels que représentés respectivement sur les figures 1 et 2, suivant six modes de réalisation ;
- la figure 11 est une vue partielle et en coupe longitudinale d'un roulement pourvu de deux codeurs tels que représentés respectivement sur les figures 1 et 2, suivant un autre mode de réalisation ; la figure 11a est une vue analogue à celle de la figure 11 qui montre l'association sur la bague fixe du roulement d'un moyen de mesure pourvu de deux capteurs ; la figure 11b est une vue en perspective du moyen de mesure de la figure 11a ;
- la figure 12 est une vue partielle et en coupe longitudinale d'un premier mode de réalisation d'un moteur pourvu d'un roulement suivant l'invention ; la figure 12a est une vue partielle et en perspective des deux capteurs de la figure 12 ;
- la figure 13 est une vue partielle et en coupe longitudinale d'un deuxième mode de réalisation d'un moteur pourvu d'un roulement suivant l'invention ; la figure 13a est une vue partielle et en perspective du moyen de mesure de la figure 13 ;
- la figure 14 est une vue partielle et en coupe longitudinale d'un troisième mode de réalisation d'un moteur pourvu d'un roulement suivant l'invention ; la figure 14a est une vue en perspective du moyen de mesure de la figure 14;
- les figures 15 à 17 sont des vues partielles et en coupe longitudinale respectivement de trois autres modes de réalisation d'un moteur suivant l'invention.

L'invention concerne un dispositif de pilotage d'un moteur à commutation électronique ou moteur brushless comprenant N paires de pôles et P phases.

Ce type de moteur comprend typiquement un rotor 1 portant les N paires de pôles magnétiques Nord/Sud et un stator portant P bobines formées respectivement d'un enroulement de phase, le rotor 1 étant mis en rotation de façon connue en pilotant l'alimentation électrique dans les P enroulements de phases.

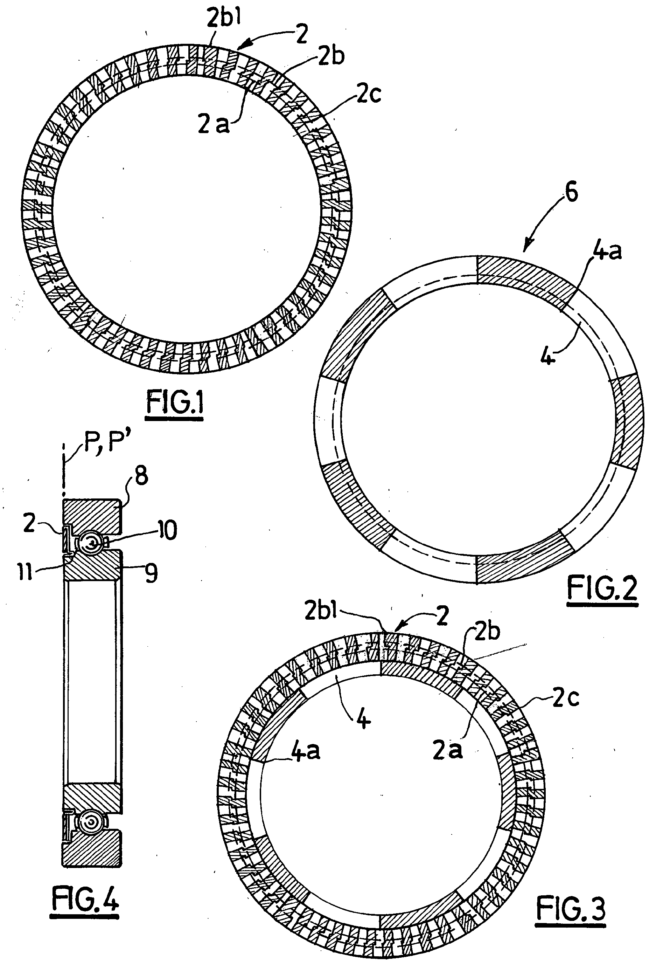

Selon un premier mode de réalisation, le dispositif de pilotage comprend un codeur 2, tel que celui représenté sur la figure 1, qui comprend une piste multipolaire principale 2a et une piste multipolaire 2b dite « top tour » qui sont concentriques, ladite piste top tour comprenant N singularités 2b1 équiréparties angulairement. Le codeur 2 est destiné à effectuer, conjointement au rotor 1, une pluralité de tours autour de son axe de rotation.

Dans un exemple particulier, le codeur 1 est formé d'un anneau magnétique multipolaire sur lequel est aimantée une pluralité de paires de pôles 2c Nord et Sud équiréparties avec une largeur angulaire constante de sorte à former les pistes principale 2a et top tour 2b, une singularité magnétique 2b1 de la piste top tour 2b étant formée de deux paires de pôles 2c qui sont différentes des autres.

Suivant la réalisation représentée sur la figure 1 (P=3, N=5), les pistes principale 2a, disposée vers l'intérieur de l'anneau 2, et top tour 2b, disposée vers l'extérieur de l'anneau 2, comprennent 50 paires de pôles 2c. Les paires de pôles 2c de la piste top tour 2b sont en retard de phase d'une valeur φ par rapport à celles de la piste principale 2a.

La piste top tour 2b comprend 5 singularités magnétiques 2b1 espacées les unes des autres de neuf paires de pôles 2c. Chaque singularité 2b1 est formée de deux paires de pôles 2c, la largeur des pôles étant agencée pour qu'un pôle soit déphasé de -φ par rapport au pôle correspondant de la piste principale 2a. Ainsi, chaque impulsion du signal C correspond à la détection d'une inversion de déphasage entre la piste principale 2a et la piste top tour 2b.

Le dispositif de pilotage comprend en outre un capteur 3 fixe disposé en regard et à distance d'entrefer du codeur 2.

Le capteur comprend au moins trois éléments sensibles dont au moins deux sont positionnés en regard de la piste principale 2a et au moins un est positionné en regard de la piste top tour 2b.

Dans un exemple particulier, les éléments sensibles sont choisis dans le groupe comprenant les sondes à effet Hall, les magnétorésistances, les magnétorésistances géantes.

Le capteur 3 utilisé est apte à délivrer deux signaux électriques S1, S2 périodiques en quadrature par l'intermédiaire des éléments sensibles disposés en regard de la piste principale 2a et un signal électrique S3 par l'intermédiaire des éléments sensibles disposés en regard de la piste top tour 2b.

Le principe d'obtention des signaux S1 et S2 à partir d'une pluralité d'éléments sensibles alignés est par exemple décrit dans le document FR-2 792 403 issu de la demanderesse.

Mais des capteurs 3 comprenant deux éléments sensibles qui sont aptes à délivrer les signaux S1 et S2 sont également connus.

Le capteur 3 comprend en outre un circuit électronique qui, à partir des signaux S1, S2 et S3, délivre des signaux digitaux de position A, B carrés en quadrature et un signal top tour C sous forme de 5 (P=3 et N=5) impulsions électriques par tour du codeur 2.

Un principe d'obtention des signaux digitaux A, B et C, ainsi que différents modes de réalisation des singularités magnétiques 2b1, sont décrits dans les documents FR-2 769 088 et EP-0 871 014.

Par un traitement électronique adapté des signaux A, B et C, il est possible d'obtenir finement notamment la position angulaire absolue du codeur 2 par rapport au capteur 3.

Suivant une réalisation, le capteur 3 comprend en outre un interpolateur, par exemple du type décrit dans le document FR-2 754 063 issu de la demanderesse, permettant d'augmenter la résolution des signaux de sortie.

Le capteur 3 peut être intégré sur un substrat en silicium ou équivalent par exemple AsGa, de sorte à former un circuit intégré et personnalisé pour une application spécifique, circuit parfois désigné sous le terme ASIC pour faire référence au circuit intégré conçu partiellement ou complètement en fonction des besoins.

Bien que la description soit faite en relation avec un ensemble codeur/capteur magnétique, il est également possible de mettre en oeuvre l'invention de façon analogue en utilisant une technologie de type optique. Par exemple, le codeur 2 peut être formé d'une cible en métal ou en verre sur laquelle les pistes principale 2a et top tour 2b ont été gravées de sorte à former un motif optique analogue au motif magnétique multipolaire exposé ci-dessus, les éléments sensibles étant alors formés de détecteurs optiques.

Le dispositif de commande comprend en outre un circuit de commutation des courants dans les enroulements de phase du moteur.

Le circuit de commutation comprend 2*P*N interrupteurs, par exemple formés chacun d'un transistor à effet de champ de type MOSFET fonctionnant à 20 kHz, qui sont disposés en pont de sorte à alimenter les enroulements de phases de façon appropriée.

Les 2*P*N interrupteurs peuvent être actionnés deux à deux suivant une logique de commutation comprenant 2*P*N états possibles.

La commande du dispositif de commutation, c'est à dire l'actionnement sélectif des interrupteurs, est effectuée par un circuit de commande qui est apte :
- lors de la détection d'une impulsion du signal top tour C, à déterminer l'état de la logique de commutation des courants dans les enroulements de phase qui correspond à la position angulaire de ladite impulsion ;
- en fonction des signaux de position A, B détectés, à déterminer en continu l'état de la logique de commutation qui est adapté à la position angulaire du rotor 1 ;
- à fournir les signaux de commutation des interrupteurs qui correspondent à l'état de la logique déterminée par le signal top tour C ou par les signaux de position A, B.

Le circuit de commande peut être réalisé sous la forme d'un microprocesseur intégrant au moins une logique de commutation du circuit de commutation qui détermine la succession des ouvertures/fermetures des différents interrupteurs.

Le fonctionnement du dispositif de pilotage selon le premier mode de réalisation est alors le suivant.

Initialement, c'est-à-dire lors de la mise en service du dispositif, le moteur est alimenté en courant par une séquence de pilotage préétablie, de sorte à permettre la mise en rotation du rotor 1 et donc celle du codeur 2.

Dès la détection d'une première impulsion top tour, le circuit de commande détermine l'état de la logique de commutation des courants dans les enroulements de phases qui correspond à la position angulaire de ladite impulsion et envoie au circuit de commutation les signaux de commutation correspondants. En particulier, les impulsions top tour peuvent être indexées par rapport à la position du rotor 1 de sorte à correspondre au début de la logique de commutation du moteur.

Ensuite, les signaux de position A, B permettent de connaître la position absolue, c'est-à-dire par rapport à l'impulsion top tour, du rotor 1 de sorte à déterminer en continu l'état de la logique de commutation qui est adapté. En effet, à chaque position du rotor 1, correspond un état de la logique de commutation qui permet d'obtenir un couple moteur optimal. Le circuit de commande peut donc fournir, au circuit de commutation, les signaux de commutation des interrupteurs qui correspondent à l'état de la logique déterminé.

En variante, il peut être prévu une étape préalable d'indexation angulaire des impulsions top tour par rapport au passage à zéro des forces électromotrices dans les phases du moteur, de sorte à faire correspondre la détection d'une impulsion top tour avec un changement d'état de la logique de commutation. Cette étape peut être réalisée en sortie de chaîne et sur un banc dédié, la valeur du déphasage pouvant être mémorisée dans une mémoire de type EEPROM ou flash du circuit de commande de sorte à permettre le recalage des instants de commutation de façon électronique. Cette mémorisation de la position angulaire des impulsions top tour permet de s'affranchir d'une indexation mécanique du codeur qui se révèle difficile et onéreuse.

Suivant l'invention, la précision dans la détermination des instants de commutation n'est donc limitée que par la précision de la mesure de la position angulaire du rotor 1.

En relation avec les figures 2 et 3, on décrit un deuxième mode de réalisation du dispositif de pilotage qui comprend en outre :
- une troisième piste multipolaire 4 comprenant N paires de pôles 4a ;
- un deuxième capteur 5 fixe comprenant P éléments sensibles, lesdits éléments sensibles étant agencés en regard et à distance d'entrefer de la troisième piste multipolaire 4 de sorte à délivrer des signaux U, V, W de commutation des courants dans les enroulements de phase.

Dans le mode de réalisation représenté (N=5 et P=3), la troisième piste multipolaire 4 comprend 5 paires de pôles 4a et le capteur 5 comprend trois éléments sensibles qui sont déphasés d'un angle mécanique permettant de fournir trois signaux électriques de commutation qui sont déphasés par exemple de 120° ou de 60° électriques.

Suivant la variante représentée sur la figure 3, la troisième piste multipolaire 4 est disposée sur le codeur 2 en étant concentrique aux pistes principale 2a et top tour 2b.

Suivant la variante représentée sur la figure 2, la troisième piste multipolaire 4 est prévue sur un deuxième codeur 6, le dispositif de pilotage comprenant alors deux codeurs 2, 6 (figures 1 et 2).

Dans ce deuxième mode de réalisation, il est possible de prévoir que le premier et le deuxième capteurs 3, 5 soient intégrés dans un même moyen de mesure 7, du fait qu'ils utilisent la même technologie de détection.

La différence de fonctionnement entre le deuxième et le premier mode de réalisation du dispositif de pilotage concerne la phase initiale au cours de laquelle la première impulsion top tour n'a pas encore été détectée.

En effet, dans le deuxième mode de réalisation, il est possible, lors de cette phase, d'utiliser les signaux de commutation U, V, W pour déterminer les états de la logique de commutation entre les phases du moteur en fonction de la position du rotor 1. En effet, ces signaux U, V, W permettent de connaître de façon grossière la position absolue du rotor 1 dès sa mise en rotation, et donc de déterminer l'état de la logique correspondante.

Ce deuxième mode de réalisation permet donc, dès la mise en rotation du rotor 1 et jusqu'à la détection d'une première impulsion top tour, de piloter le moteur de façon plus fine que dans le cas du premier mode de réalisation, en ce qu'il ne nécessite pas l'utilisation d'une procédure de démarrage préétablie. En particulier, le deuxième mode de réalisation permet de piloter le moteur sans provoquer de rotation aléatoire et temporaire qui peuvent exister dans le premier mode de réalisation.

En variante, le procédé de pilotage au moyen d'un dispositif selon le deuxième mode de réalisation peut comprendre une étape itérative de comparaison entre les signaux de position A, B et les signaux top tour C, de sorte à détecter une éventuelle anomalie, c'est-à-dire une discordance entre l'état généré par les signaux A, B et celui généré par les signaux C. Et, si une anomalie est détectée, la détermination des instants de commutation ultérieurs est réalisée à partir des signaux de commutation U, V, W, c'est-à-dire le passage du pilotage en mode dégradé jusqu'à la résolution de l'anomalie.

En relation avec les figures 4 à 11, on décrit un roulement équipé d'au moins un codeur 2, 6 et/ou d'au moins un capteur 3, 5 d'un dispositif de pilotage selon l'invention.

Le roulement comprend une bague extérieure fixe 8 destinée à être associée à un organe fixe, une bague intérieure tournante 9 destinée à être mise en rotation par le rotor 1 du moteur électrique et des corps roulants 10 disposés entre lesdites bagues.

Dans les modes de réalisation représentés, le ou les codeurs 2, 6 sont surmoulé(s) sur une portée cylindrique annulaire d'une armature 11 qui est associée, par exemple par emmanchement, sur une face de la bague intérieure 9.

Dans le mode de réalisation représenté sur la figure 4, le dispositif de pilotage comprend un codeur 2 tel que celui représenté sur la figure 1 ou 3.

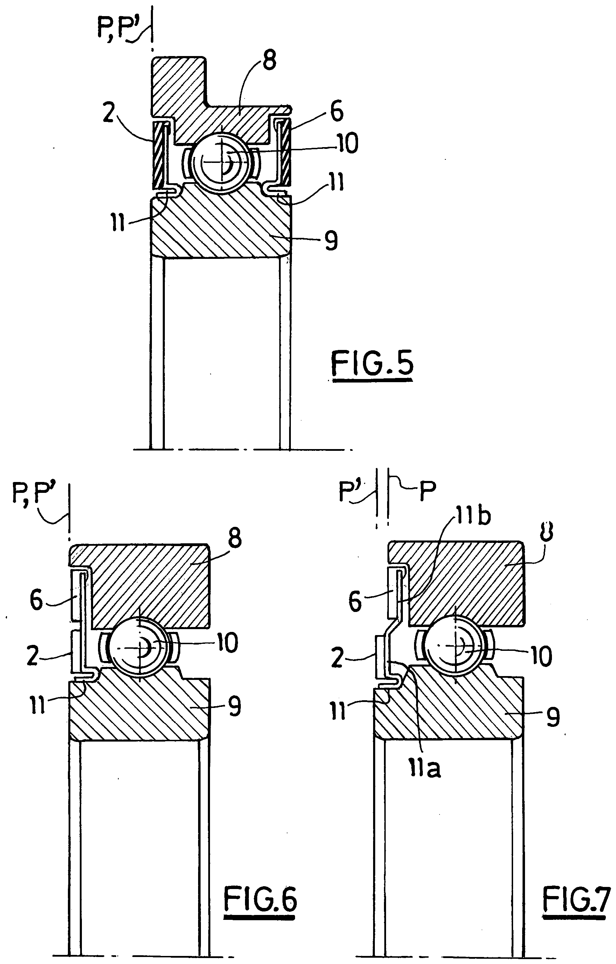

Dans les modes de réalisation représentés sur les figures 5 à 11, le dispositif de pilotage comprend deux codeurs 2, 6 tels que représentés respectivement sur les figures 1 et 2.

Sur les figures 5, 8, 9 et 11, chaque codeur 2, 6 est associé à une armature 11, alors que sur les figures 6, 7 et 10 les deux codeurs 2, 6 sont associés de façon adjacente sur une même armature 11.

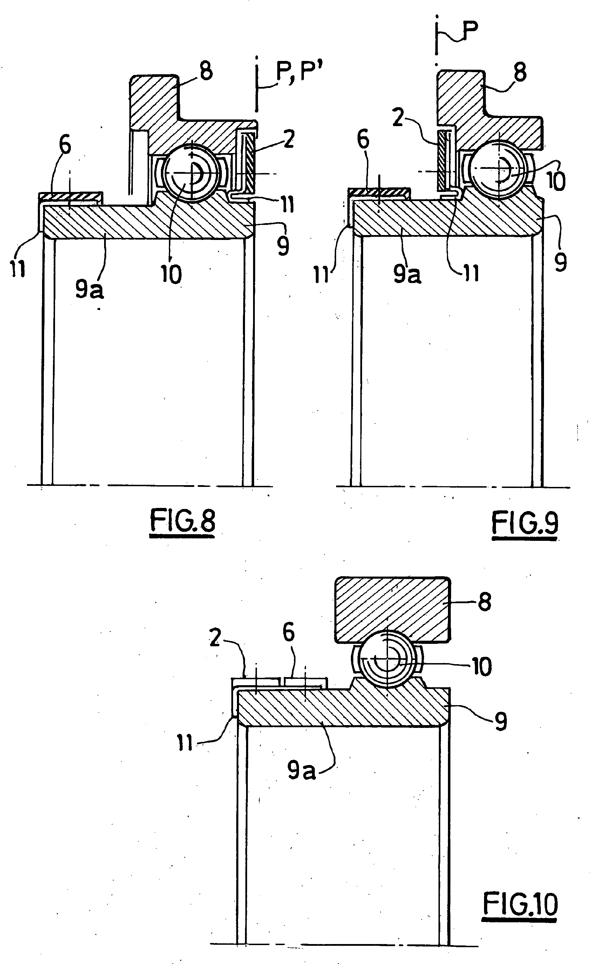

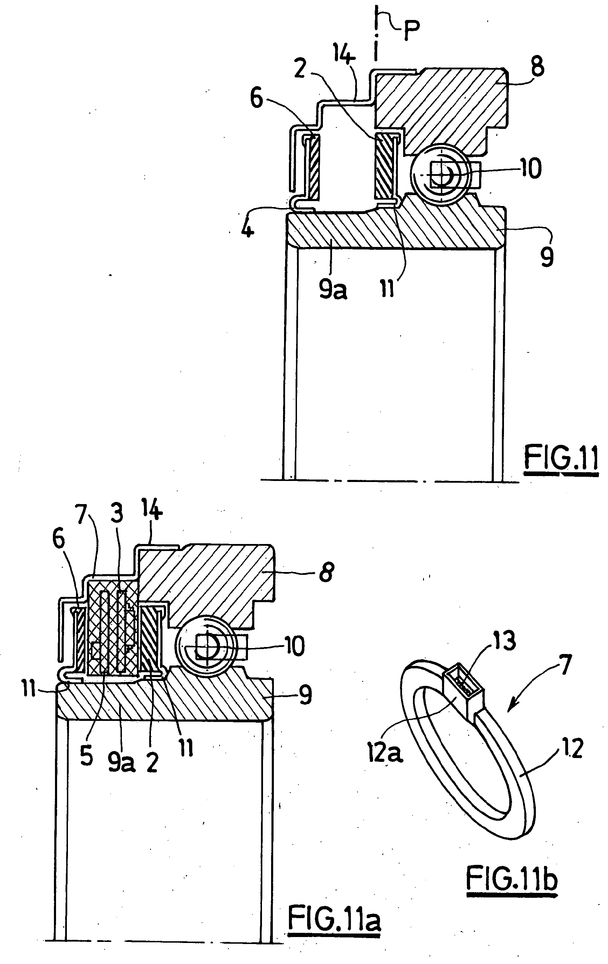

Sur les figures 5 et 8, les deux codeurs 2, 6 sont prévus de part et d'autre des corps roulants 10, alors que sur les figures 9 et 11 les deux codeurs 2, 6 sont prévus du même coté des corps roulants 10. Sur les figures 11, les deux codeurs 2, 6 sont disposés en regard l'un de l'autre.

Sur les figures 8 à 11, la bague tournante 9 comprend une extension axiale 9a sur laquelle au moins un codeur 2, 6 est associé. En particulier, sur les figures 8 et 9, un codeur 6 est associé sur ladite extension 9a de sorte à permettre une lecture radiale des impulsions, l'autre codeur 2 étant associé sur la bague tournante 9 de sorte à permettre une lecture faciale des impulsions. Sur la figure 10, l'armature 11 portant les deux codeurs 2, 6 est associée sur l'extension 9a de sorte à permettre une lecture radiale des impulsions. Sur la figure 11, les deux codeurs 2, 6 sont associés de sorte à permettre une lecture faciale des impulsions respectivement issues desdits deux codeurs.

Dans les modes de réalisation représentés sur les figures 5 à 9 et 11, au moins un codeur 2, 6 est associé à la bague tournante 9 de sorte que la face extérieure dudit codeur soit sensiblement contenue dans le plan P d'une face latérale de la bague fixe 8 et/ou dans le plan P' d'une face latérale de la bague tournante 9. Cette caractéristique, notamment divulguée dans le document EP-0 607 719 issu de la demanderesse, permet d'une part de protéger le codeur 2, 6 à l'intérieur du roulement et d'autre part de pouvoir dissocier le capteur 3, 5 du roulement en gardant la maîtrise de l'entrefer.

Sur les figures 5 et 6, les plans P et P' sont confondus et les deux codeurs 2, 6 sont disposés sensiblement dans ces plans. Sur la figure 7, les plans P et P' sont décalées axialement et l'armature 11 comprend également deux portées 11a, 11b décalés axialement, chacune des portées portant un codeur 2, 6 de sorte que lesdits codeurs soient respectivement sensiblement contenus dans les plans P et P'. Sur les figures 8, 9 et 11, seul un codeur 2 est contenu dans le plan P.

En relation avec les figures 11, on décrit un roulement équipé d'un moyen de mesure 7 comprenant les deux capteurs 3, 5, ledit moyen étant associé à la bague fixe 8.

Les deux codeurs 2, 6 sont espacés l'un de l'autre de sorte à présenter un espace annulaire agencé pour recevoir le moyen de mesure 7 en disposant les éléments sensibles des capteurs 3, 5 en regard et à distance d'entrefer respectivement d'un codeur 2, 6 (figure 11a). A cet effet, le moyen de mesure 7 (figure 11 b) comprend un anneau 12 pourvu d'une excroissance 12a dans laquelle sont disposés, de part et d'autre, les deux capteurs 3, 5, ladite excroissance logeant la connectique d'entrée/sortie 13 desdits capteurs. Le moyen de mesure 7 est par exemple obtenu par une technique de surmoulage plastique.

En outre, le roulement comprend une armature 14 permettant l'association du moyen de mesure 7 sur la bague fixe 8 dudit roulement.

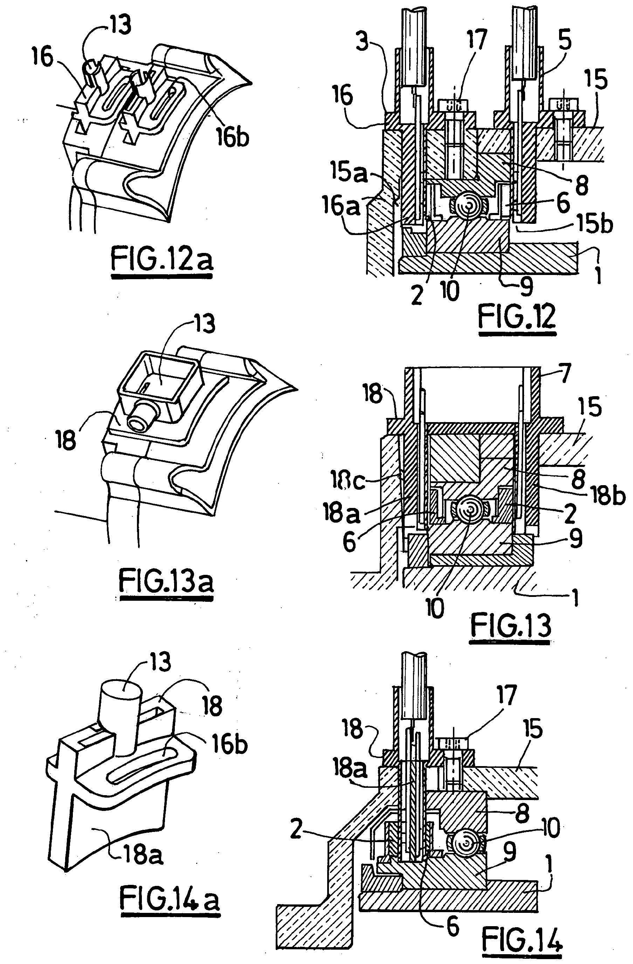

En relation avec les figures 12 à 14 et 16, 17, on décrit un moteur à commutation électronique équipé d'un dispositif de pilotage selon l'invention, ledit moteur comprenant un rotor 1 monté en rotation par l'intermédiaire d'un roulement suivant l'invention. A cet effet, la bague extérieure 8 du roulement est associée au carter 15 du moteur et la bague intérieure 9 est associée, par exemple par emmanchement, au rotor 1 dudit moteur. Les deux capteurs 3, 5 sont disposés respectivement dans une fente 15a, 15b du carter 15 et sont associés au carter 15 du moteur. En variante, on peut prévoir qu'au moins un capteur 3, 5 soit associé à la bague extérieure 8 du roulement.

Sur les figures 12 à 14, le roulement comprend deux codeurs 2, 6 qui sont associés à la bague tournante 9.

Sur les figures 12, les deux capteurs 3, 5 sont associés au carter 15 par vissage de sorte à disposer les éléments sensibles en regard et à distance d'entrefer respectivement d'un codeur 2, 6. A cet effet, les capteurs 3, 5 comprennent un corps 16 pourvu d'une extension 16a intégrant les éléments sensibles, un orifice 16b destiné à recevoir une vis d'association 17, la connectique d'entrée/sortie 13 du capteur 3, 5.

Sur les figures 13 et 14, les deux capteurs 3, 5 sont intégrés dans un même moyen de mesure 7 comprenant, de façon monobloc, un corps 18 et la connectique d'entrée/sortie 13 des capteurs 3, 5. Sur les figures 13, le corps 18 comprend deux extensions 18a, 18b logeant les éléments sensibles, lesdites extensions étant séparées l'une de l'autre de sorte à permettre la lecture des impulsions issues des deux codeurs 2, 6 qui sont disposés de part et d'autre des corps roulants 10. Par ailleurs, le corps 18 comprend une languette élastique d'appui 18c destinée à permettre le positionnement des éléments sensibles à distance d'entrefer du codeur 2. Sur les figures 14, le corps 18 comprend une extension 18a logeant de part et d'autre les éléments sensibles de sorte à permettre la lecture des impulsions issues des deux codeurs 2, 6 qui sont disposés en regard l'un de l'autre.

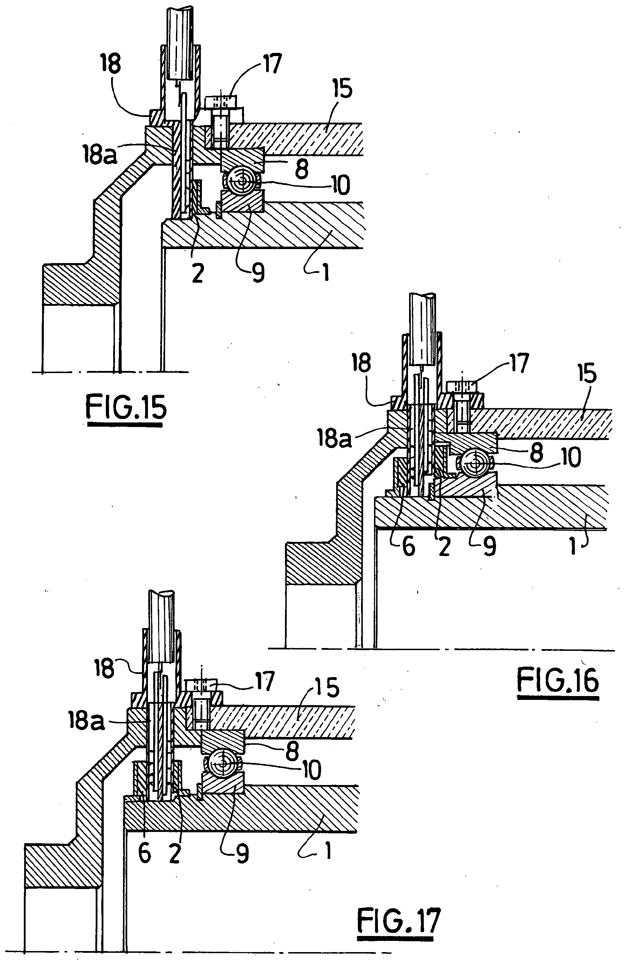

Sur les figures 16 et 17, au moins un codeur 2, 6 est associé au rotor 1. A cet effet, l'armature 11 est par exemple emmanchée sur une portée prévue sur la périphérie du rotor 1. Dans ces modes de réalisation, le moyen de mesure 7 a une structure analogue à celle représentée sur la figure 14a.

Sur les figures 16 et 17, le dispositif de pilotage comprend deux codeurs 2, 6 tels que respectivement représentés sur les figures 1 et 2. Dans le mode de réalisation de la figure 16, un codeur 2, 6 est associé à la bague tournante 9 du roulement et l'autre codeur 6, 2 est associé au rotor 1, alors que sur la figure 17 les deux codeurs 2, 6 sont associés au rotor 1.

Sur la figure 15, le moteur est équipé d'un dispositif de pilotage qui comprend un codeur 2 tel que représenté sur les figures 1 ou 3, ledit codeur étant associé au rotor 1 et le capteur étant associé au carter 15. Dans ce mode de réalisation, le roulement est donc dépourvu d'élément du dispositif de pilotage.

## Revendications

1. Dispositif de pilotage d'un moteur électrique de type à commutation électronique comprenant N paires de pôles et P phases, ledit dispositif comprenant :
- un codeur (2) destiné à être mis en rotation conjointement au rotor (1) du moteur, ledit codeur comprenant une piste multipolaire principale (2a) et une piste multipolaire (2b) dite « top tour » qui sont concentriques, ladite piste top tour comprenant N singularités (2b1) équiréparties angulairement ;
- un capteur (3) fixe disposé en regard et à distance d'entrefer du codeur (2), comprenant au moins trois éléments sensibles dont au moins deux sont positionnés en regard de la piste principale (2a) de sorte à délivrer deux signaux électriques S1, S2 périodiques en quadrature et au moins un est positionné en regard de la piste top tour (2b) de sorte à délivrer un signal électrique S3, le capteur (3) comprenant un circuit électronique apte, à partir des signaux S1, S2 et S3, à délivrer deux signaux digitaux de position (A, B) carrés en quadrature qui sont représentatifs de la position angulaire du rotor (1) et un signal top tour (C) sous forme de N impulsions par tour du codeur (2) ;
- un circuit de commutation des courants dans les enroulements de phase du moteur qui comprend 2*P*N interrupteurs ;
- un circuit de commande du circuit de commutation qui est apte :
- lors de la détection d'une impulsion du signal top tour (C), à déterminer l'état de la logique de commutation des courants dans les enroulements de phase qui correspond à la position angulaire de ladite impulsion ;
- en fonction des signaux de position (A, B) détectés, à déterminer en continu l'état de la logique de commutation qui est adapté à la position angulaire du rotor (1) ;
- à fournir les signaux de commutation des interrupteurs qui correspondent à l'état de la logique déterminée par le signal top tour (C) ou par les signaux de position (A, B), **caractérisé en ce que** chaque piste multipolaire (2a, 2b, 4) est formée d'un anneau magnétique sur lequel sont aimantés des pôles Nord et Sud équirépartis avec une largeur angulaire constante, une singularité magnétique (2b1) de la piste top tour (2b) étant formée de deux paires de pôles adjacentes dont la jonction est différente des autres.

2. Dispositif selon la revendication 1, **caractérisé en ce qu'**il comprend en outre :
- une troisième piste multipolaire (4) comprenant N paires de pôles (4a) ;
- un deuxième capteur (5) fixe comprenant P éléments sensibles, lesdits éléments sensibles étant agencés en regard et à distance d'entrefer de la troisième piste multipolaire (4) de sorte à délivrer des signaux (U, V, W) de commutation des courants dans les enroulements de phase.

3. Dispositif selon la revendication 2, **caractérisé en ce que** la troisième piste multipolaire (4) est disposée sur le codeur (2) en étant concentrique aux pistes principale (2a) et top tour (2b).

4. Dispositif selon la revendication 2, **caractérisé en ce que** la troisième piste multipolaire (4) est prévue sur un deuxième codeur (6).

5. Dispositif selon l'une quelconque des revendications 2 à 4, **caractérisé en ce que** le premier et le deuxième capteur (3, 5) sont intégrés dans un même moyen de mesure (7).

6. Roulement du type comprenant une bague fixe (8) destinée à être associée à un organe fixe, une bague tournante (9) destinée à être mise en rotation par le rotor (1) du moteur électrique et des corps roulants (10) disposés entre lesdites bagues, ledit roulement étant **caractérisé en ce qu'**au moins un codeur (2, 6) d'un dispositif de pilotage selon l'une quelconque des revendications 1 à 5 est associé à la bague tournante (9).

7. Roulement selon la revendication 6, **caractérisé en ce qu'**au moins un codeur (2, 6) est associé à la bague tournante (9) de sorte que la face extérieure dudit codeur soit sensiblement contenue dans le plan P d'une face latérale de la bague fixe (8).

8. Roulement selon la revendication 6 ou 7, **caractérisé en ce qu'**au moins un codeur (2, 6) est associé à la bague tournante (9) de sorte que la face extérieure dudit codeur soit sensiblement contenue dans le plan P' d'une face latérale de la bague tournante (9).

9. Roulement selon l'une quelconque des revendications 6 à 8, **caractérisé en ce que** la bague tournante (9) comprend une extension axiale (9a) sur laquelle au moins un codeur (2, 6) est associé.

10. Roulement selon l'une quelconque des revendications 6 à 9, **caractérisé en ce qu'**au moins un codeur (2, 6) est associé sur la bague tournante (9) de sorte à permettre une lecture radiale des impulsions.

11. Roulement selon l'une quelconque des revendications 6 à 10, **caractérisé en ce qu'**au moins un codeur (2, 6) est associé sur la bague tournante (9) de sorte à permettre une lecture faciale des impulsions.

12. Roulement selon l'une quelconque des revendications 6 à 11, **caractérisé en ce qu'**au moins un codeur (2, 6) est porté par une armature d'association (11).

13. Roulement selon la revendication 12 lorsqu'elle dépend de la revendication 4, **caractérisé en ce que** les deux codeurs (2, 6) sont portés par une même armature d'association (11).

14. Roulement selon la revendication 13, **caractérisé en ce que** les deux codeurs (2, 6) sont prévus d'un même coté des corps roulants (10).

15. Roulement selon la revendication 14, **caractérisé en ce que** les deux codeurs (2, 6) sont disposés en regard l'un de l'autre.

16. Roulement selon la revendication 13, **caractérisé en ce que** les deux codeurs (2, 6) sont prévus de part et d'autre des corps roulants (10).

17. Roulement selon l'une quelconque des revendications 6 à 16, **caractérisé en ce qu'**au moins un capteur (3, 5) d'un dispositif de pilotage selon l'une quelconque des revendications 1 à 6 est associé à la bague fixe (8) du roulement.

18. Moteur à commutation électronique équipé d'un dispositif de pilotage selon l'une quelconque des revendications 1 à 5, du type comprenant un rotor (1) monté en rotation par l'intermédiaire d'un roulement selon la revendication 17.

19. Moteur à commutation électronique équipé d'un dispositif de pilotage selon l'une quelconque des revendications 1 à 5, du type comprenant un rotor (1) monté en rotation par l'intermédiaire d'un roulement selon l'une quelconque des revendications 6 à 17, au moins un capteur (3, 5) étant associé à une pièce fixe du moteur.

20. Moteur selon la revendication 19, **caractérisé en ce qu'**au moins un capteur (3, 5) comprend au moins une languette élastique d'appui (18c) destinée à permettre le positionnement des éléments sensibles à distance d'entrefer du codeur (2, 6) dont ils doivent détecter les impulsions.

21. Moteur selon l'une quelconque des revendications 18 à 20, **caractérisé en ce qu'**au moins un codeur (2, 6) est associé au rotor (1).

22. Moteur à commutation électronique équipé d'un dispositif de pilotage selon l'une quelconque des revendications 1 à 5, du type comprenant un rotor (1) et une pièce fixe, dans lequel au moins un codeur (2, 6) est associé au rotor (1) et au moins un capteur (3, 5) est associé à la pièce fixe.

23. Procédé de pilotage d'un moteur selon l'une quelconque des revendications 18 à 22 lorsqu'elle dépend de la revendication 1, **caractérisé en ce qu'**il comprend les étapes successives suivantes :
- alimentation du moteur selon une séquence temporelle préétablie de sorte à permettre la mise en rotation du rotor (1) et donc celle du codeur (2) ;
- détection d'une première impulsion top tour ;
- détermination de l'état de la logique de commutation correspondant à la position angulaire de ladite impulsion ;
- envoi au circuit de commutation des signaux de commutation correspondant à l'état déterminé ;
- détermination itérative des états de la logique de commutation ultérieurs à partir des signaux de position (A, B) ;
- envoi au circuit de commutation des signaux de commutation correspondant aux états déterminés.

24. Procédé de pilotage d'un moteur selon l'une quelconque des revendications 18 à 22 lorsqu'elle dépend de la revendication 2, **caractérisé en ce qu'**il comprend les étapes successives suivantes :
- utilisation initiale des signaux de commutation (U, V, W) pour la détermination des états de la logique de commutation entre les phases du moteur ;
- détection d'une première impulsion top tour ;
- détermination de l'état de la logique de commutation correspondant à la position angulaire de ladite impulsion ;
- envoi au circuit de commutation des signaux de commutation correspondant à l'état déterminé ;
- détermination itérative des états de la logique de commutation ultérieurs à partir des signaux de position (A, B) ;
- envoi au circuit de commutation des signaux de commutation correspondant aux états déterminés.

25. Procédé selon la revendication 24, **caractérisé en ce qu'**il comprend une étape itérative de comparaison entre les signaux de position (A, B) et les signaux top tour (C), de sorte à détecter une éventuelle anomalie et, si une anomalie est détectée, la détermination des instants de commutation ultérieurs à partir des signaux de commutation (U, V, W).

26. Procédé selon l'une quelconque des revendications 23 à 25, **caractérisé en ce qu'**il comprend une étape préalable d'indexation angulaire des impulsions top tour par rapport au passage à zéro des forces électromotrices dans les phases du moteur.

## Patentansprüche

1. Vorrichtung zum Steuern eines elektronisch kommutierten Elektromotors, N Pol-Paare und P Phasen umfassend, wobei die besagte Vorrichtung umfasst:
- einen Drehgeber (2), der dazu bestimmt ist, gemeinsam mit dem Rotor (1) des Motors in Drehung versetzt zu werden, wobei der besagte Drehgeber eine mehrpolige Hauptspur (2a) und eine mehrpolige sogenannte "Top-Tour"-Spur (2b) umfasst, die konzentrisch sind, wobei die besagte Top-Tour-Spur N Singularitäten (2b1) umfasst, die winkelig gleichmäßig verteilt sind;
- einen festen Sensor (3), der gegenüber und auf Abstand zum Luftspalt des Drehgebers (2) angeordnet ist, und zumindest drei empfindliche Elemente aufweist, von denen zumindest zwei gegenüber der Hauptspur (2a) positioniert sind, um zwei periodisch phasenverschobene elektrische Signale S1, S2 abzugeben, und mindestens einer gegenüber der Top-Tour-Spur (2b) positioniert ist, um ein elektrisches Signal S3 abzugeben, wobei der Sensor (3) eine elektronische Schaltung umfasst, die imstande ist, ausgehend von den Signalen S1, S2 und S3 zwei quadratisch phasenverschobene digitale Positionssignale (A, B) abzugeben, die für die Winkelposition des Rotors (1) repräsentativ sind, und ein Top-Tour-Signal (C) in Form von N Impulsen pro Umdrehung des Drehgebers (2);
- eine Kommutationsschaltung der Ströme in den Phasenwicklungen des Motors, die 2*P*N Schalter umfasst;
- eine Schaltung zum Steuern der Kommutationsschaltung, die imstande ist:
- bei der Detektion eines Impulses des Top-Tour-Signals (C) den Zustand der Kommutationslogik der Ströme in den Phasenwicklungen zu bestimmen, die der Winkelposition des besagten Impulses entspricht;
- in Abhängigkeit von den detektierten Positionssignalen (A, B) durchgehend den Zustand der Kommutationslogik zu bestimmen, die der Winkelposition des Rotors (1) angepasst ist;
- die Kommutationssignale der Schalter bereitzustellen, die dem Zustand der durch das Top-Tour-Signal (C) oder durch die Positionssignale (A, B) bestimmten Logik entsprechen, **dadurch gekennzeichnet, dass** jede mehrpolige Spur (2a, 2b, 4) durch einen Magnetring gebildet wird, auf dem Nord- und Süd-Pole magnetisiert sind, die mit einer konstanten Winkelbreite gleichmäßig verteilt sind, wobei eine magnetische Singularität (2b1) der Top-Tour-Spur (2b) durch zwei angrenzende Pol-Paare gebildet wird, deren Verbindung sich von den anderen unterscheidet.

2. Vorrichtung nach Anspruch 1, **dadurch gekennzeichnet; dass** sie weiter umfasst:
- eine dritte mehrpolige Spur (4), N Pol-Paare (4a) umfassend;
- einen zweiten festen Sensor (5), P empfindliche Elemente umfassend, wobei die besagten empfindlichen Elemente gegenüber und auf Abstand zum Luftspalt der dritten mehrpoligen Spur (4) angeordnet sind, um Kommutationssignale (U, V, W) für die Ströme in den Phasenwicklungen zu liefern.

3. Vorrichtung nach Anspruch 2, **dadurch gekennzeichnet, dass** die dritte mehrpolige Spur (4) auf dem Drehgeber (2) angeordnet ist, indem sie konzentrisch zur Hauptspur (2a) und zur Top-Tour-Spur (2b) ist.

4. Vorrichtung nach Anspruch 2, **dadurch gekennzeichnet, dass** die dritte mehrpolige Spur (4) auf einem zweiten Drehgeber (6) vorgesehen ist.

5. Vorrichtung nach einem der Ansprüche 2 bis 4, **dadurch gekennzeichnet, dass** der erste und der zweite Sensor (3, 5) in einem selben Messmittel (7) integriert sind.

6. Lager, in der Art einen festen Ring (8) umfassend, der dazu bestimmt ist, einem festen Organ zugeordnet zu werden, einen drehenden Ring (9), der dazu bestimmt ist, durch den Rotor (1) des Elektromotors und Rollkörper (10) in Drehung versetzt zu werden, die zwischen den besagten Ringen angeordnet sind, wobei das besagte Lager **dadurch gekennzeichnet ist, dass** zumindest ein Drehgeber (2, 6) einer Vorrichtung zum Steuern nach einem der Ansprüche 1 bis 5 dem drehenden Ring (9) zugeordnet ist.

7. Lager nach Anspruch 6, **dadurch gekennzeichnet, dass** zumindest ein Drehgeber (2, 6) dem drehenden Ring (9) zugeordnet ist, sodass die Außenseite des besagten Drehgebers im Wesentlichen auf der Ebene P einer lateralen Seite des festen Ringes (8) enthalten ist.

8. Lager nach Anspruch 6 oder 7, **dadurch gekennzeichnet, dass** zumindest ein Drehgeber (2, 6) dem drehenden Ring (9) zugeordnet ist, sodass die Außenseite des besagten Drehgebers im Wesentlichen auf der Ebene P' einer lateralen Seite des drehenden Ringes (9) enthalten ist.

9. Lager nach einem der Ansprüche 6 bis 8, **dadurch gekennzeichnet, dass** der drehende Ring (9) eine axiale Erweiterung (9a) umfasst, auf der zumindest ein Drehgeber (2, 6) zugeordnet ist.

10. Lager nach einem der Ansprüche 6 bis 9, **dadurch gekennzeichnet, dass** zumindest ein Drehgeber (2, 6) auf dem drehenden Ring (9) zugeordnet ist, um ein radiales Ablesen der Impulse zu erlauben.

11. Lager nach einem der Ansprüche 6 bis 10, **dadurch gekennzeichnet, dass** zumindest ein Drehgeber (2, 6) auf dem drehenden Ring (9) zugeordnet ist, um ein frontales Ablesen der Impulse zu erlauben.

12. Lager nach einem der Ansprüche 6 bis 11, **dadurch gekennzeichnet, dass** zumindest ein Drehgeber (2, 6) durch eine Zuordnungsarmatur (11) getragen wird.

13. Lager nach Anspruch 12, wenn von Anspruch 4 abhängig, **dadurch gekennzeichnet, dass** die beiden Drehgeber (2, 6) durch eine selbe Zuordnungsarmatur (11) getragen werden.

14. Lager nach Anspruch 13, **dadurch gekennzeichnet, dass** die beiden Drehgeber (2, 6) auf einer selben Seite der Rollkörper (10) vorgesehen sind.

15. Lager nach Anspruch 14, **dadurch gekennzeichnet, dass** die beiden Drehgeber (2, 6) einander gegenüber angeordnet sind.

16. Lager nach Anspruch 13, **dadurch gekennzeichnet, dass** die beiden Drehgeber (2, 6) beiderseits der Rollkörper (10) vorgesehen sind.

17. Lager nach einem der Ansprüche 6 bis 16, **dadurch gekennzeichnet, dass** zumindest ein Sensor (3, 5) einer Vorrichtung zum Steuern nach einem der Ansprüche 1 bis 6 dem festen Ring (8) des Lagers zugeordnet ist.

18. Elektronisch kommutierter Motor, der mit einer Vorrichtung zum Steuern nach einem der Ansprüche 1 bis 5 ausgerüstet ist, in der Art einen Rotor (1) umfassend, der über ein Lager nach Anspruch 17 drehend montiert ist.

19. Elektronisch kommutierter Motor, der mit einer Vorrichtung zum Steuern nach einem der Ansprüche 1 bis 5 ausgerüstet ist, in der Art einen Rotor (1) umfassend, der über ein Lager nach einem der Ansprüche 6 bis 17 drehend montiert ist, wobei zumindest ein Sensor (3, 5) einem festen Teil des Motors zugeordnet ist.

20. Motor nach Anspruch 19, **dadurch gekennzeichnet, dass** zumindest ein Sensor (3, 5) zumindest eine elastische Stützzunge (18c) umfasst, die dazu bestimmt ist, die Positionierung der empfindlichen Elemente auf Abstand zum Luftspalt des Drehgebers (2, 6) zu erlauben, dessen Impulse sie detektieren sollen.

21. Motor nach einem der Ansprüche 18 bis 20, **dadurch gekennzeichnet, dass** zumindest ein Drehgeber (2, 6) dem Rotor (1) zugeordnet ist.

22. Elektronisch kommutierter Motor, der mit einer Vorrichtung zum Steuern nach einem der Ansprüche 1 bis 5 ausgerüstet ist, in der Art einen Rotor (1) und ein festes Teil umfassend, wobei zumindest ein Drehgeber (2, 6) dem Rotor (1) zugeordnet ist, und zumindest ein Sensor (3, 5) dem festen Teil zugeordnet ist.

23. Verfahren zum Steuern eines Motors nach einem der Ansprüche 18 bis 22, wenn von Anspruch 1 abhängig, **dadurch gekennzeichnet, dass** es die folgenden aufeinanderfolgenden Schritte umfasst:
- Versorgen des Motors entsprechend einer bestimmten zeitlichen Sequenz, um das in Drehung versetzen des Rotors (1) und somit jenes des Drehgebers (2) zu erlauben;
- Detektieren eines ersten Top-Tour-Impulses;
- Bestimmen des Zustands der Kommutationslogik, die der Winkelposition des besagten Impulses entspricht;
- Senden zur Kommutationsschaltung der Kommutationssignale, die dem bestimmten Zustand entsprechen;
- iteratives Bestimmen der späteren Zustände der Kommutationslogik ab den Positionssignalen (A, B);
- Senden zur Kommutationsschaltung der Kommutationssignale, die den bestimmten Zuständen entsprechen.

24. Verfahren zum Steuern eines Motors nach einem der Ansprüche 18 bis 22, wenn von Anspruch 2 abhängig, **dadurch gekennzeichnet, dass** es die folgenden Schritte umfasst:
- erste Verwendung der Kommutationssignale (U, V, W) zum Bestimmen der Zustände der Kommutationslogik zwischen den Phasen des Motors;
- Detektion eines ersten Top-Tour-Impulses;
- Bestimmen des Zustands der Kommutationslogik, die der Winkelposition des besagten Impulses entspricht;
- Senden zur Kommutationsschaltung der Kommutationssignale, die dem bestimmten Zustand entsprechen;
- iteratives Bestimmen der späteren Zustände der Kommutationslogik ab den Positionssignalen (A, B);
- Senden zur Kommutationsschaltung der Kommutationssignale, die den bestimmten Zuständen entsprechen.

25. Verfahren nach Anspruch 24, **dadurch gekennzeichnet, dass** es einen iterativen Schritt zum Vergleichen zwischen den Positionssignalen (A, B) und den Top-Tour-Signalen (C) umfasst, um eine eventuelle Anomalie zu detektieren, und falls eine Anomalie detektiert wird, das Bestimmen der späteren Kommutationszeitpunkte, ab den Kommutationssignalen (U, V, W).

26. Verfahren nach einem der Ansprüche 23 bis 25, **dadurch gekennzeichnet, dass** es einen vorherigen Schritt zur Winkelindexierung der Top-Tour-Impulse im Verhältnis zum Null-Durchlauf der elektromotorischen Kräfte in den Phasen des Motors umfasst.

## Claims

1. Device for controlling an electronically commutated electric motor comprising N pairs of poles and P phases, said device comprising:
- a coder (2) intended to be brought into rotation together with the rotor (1) of the motor, said coder comprising a main multipole track (2a) and a so-called "revolution pip" multipole track (2b) that are concentric, said revolution pip track comprising N singularities (2b1) angularly distributed evenly;
- a fixed sensor (3) positioned opposite and at a gap distance from the coder (2), comprising at least three sensitive elements, at least two of which are positioned opposite the main track (2a) so as to deliver two periodic electric signals S1, S2 in quadrature and at least one of which is positioned opposite the revolution pip track (2b) so as to deliver an electric signal S3, the sensor (3) comprising an electronic circuit able, from the signals S1, S2 and S3, to deliver two square digital position signals (A, B) in quadrature, which represent the angular position of the rotor (1) and a revolution pip signal (C) in the form of N pulses per revolution of the coder (2);
- a circuit for commutating the currents in the phase windings of the motor which comprises 2*P*N switches;
- a circuit for controlling the commutation circuit, which is able:
-- when a pulse of the revolution pip signal (C) is detected, to determine the state of the commutation logic of the currents in the phase windings which corresponds to the angular position of said pulse;
-- according to the position signals (A, B) detected, to continuously determine the state of the commutation logic which is adapted according to the angular position of the rotor (1);
-- to supply the commutation signals for the switches which correspond to the state of the logic determined by the revolution pip signal (C) or by the position signals (A, B), **characterised in that** each multipole track (2a, 2b, 4) is formed by a magnetic ring on which North and South poles are magnetised, said poles being evenly distributed with a constant angular width, a magnetic singularity (2b1) of the revolution pip track (2b) being formed by two adjacent pairs of poles, the junction of which is different from the others.

2. Device according to claim 1, **characterised in that** it further comprises:
- a third multipole track (4) comprising N pairs of poles (4a);
- a second fixed sensor (5) comprising P sensitive elements, said sensitive elements being arranged opposite and at a gap distance from the third multipole track (4) so as to deliver signals (U, V, W) for commutating the currents in the phase windings.

3. Device according to claim 2, **characterised in that** the third multipole track (4) is positioned on the coder (2) and is concentric to the main track (2a) and the revolution pip track (2b).

4. Device according to claim 2, **characterised in that** the third multipole track (4) is provided on a second coder (6).

5. Device according to any one of claims 2 to 4, **characterised in that** the first and the second sensor (3, 5) are incorporated into the same measuring means (7).

6. Bearing of the type comprising a fixed race (8) intended to be associated with a fixed member, a rotating race (9) intended to be brought into rotation by the rotor (1) of the electric motor and rolling bodies (10) positioned between said races, said bearing being **characterised in that** at least one coder (2, 6) of a control device according to any one of claims 1 to 5 is associated with the rotating race (9).

7. Bearing according to claim 6, **characterised in that** at least one coder (2, 6) is associated with the rotating race (9) such that the outer surface of said coder is substantially contained in the plane P of a side surface of the fixed race (8).

8. Bearing according to either claim 6 or claim 7, **characterised in that** at least one coder (2, 6) is associated with the rotating race (9) such that the outer surface of said coder is substantially contained in the plane P' of a side surface of the rotating race (9).

9. Bearing according to any one of claims 6 to 8, **characterised in that** the rotating race (9) comprises an axial extension (9a) with which at least one coder (2, 6) is associated.

10. Bearing according to any one of claims 6 to 9, **characterised in that** at least one coder (2, 6) is associated with the rotating race (9) such as to allow for the radial reading of the pulses.

11. Bearing according to any one of claims 6 to 10, **characterised in that** at least one coder (2, 6) is associated with the rotating race (9) such as to allow for the frontal reading of the pulses.

12. Bearing according to any one of claims 6 to 11, **characterised in that** at least one coder (2, 6) is borne by an association armature (11).

13. Bearing according to claim 12 when dependent on claim 4, **characterised in that** the two coders (2, 6) are borne by the same association armature (11).

14. Bearing according to claim 13, **characterised in that** the two coders (2, 6) are provided on the same side of the rolling bodies (10).

15. Bearing according to claim 14, **characterised in that** the two coders (2, 6) are positioned opposite each other.

16. Bearing according to claim 13, **characterised in that** the two coders (2, 6) are provided on either side of the rolling bodies (10).

17. Bearing according to any one of claims 6 to 16, **characterised in that** at least one sensor (3, 5) of a control device according to any one of claims 1 to 6 is associated with the fixed race (8) of the bearing.

18. Electronically commutated motor provided with a control device according to any one of claims 1 to 5, of the type comprising a rotor (1) mounted in rotation via a bearing according to claim 17.

19. Electronically commutated motor provided with a control device according to any one of claims 1 to 5, of the type comprising a rotor (1) mounted in rotation via a bearing according to any one of claims 6 to 17, at least one sensor (3, 5) being associated with a fixed part of the motor.

20. Motor according to claim 19, **characterised in that** at least one sensor (3, 5) comprises at least one resilient bearing tab (18c) intended to allow the sensitive elements to be positioned at a gap distance from the coder (2, 6), the pulses of which they must detect.

21. Motor according to any one of claims 18 to 20, **characterised in that** at least one coder (2, 6) is associated with the rotor (1).

22. Electronically commutated motor provided with a control device according to any one of claims 1 to 5, of the type comprising a rotor (1) and a fixed part, wherein at least one coder (2, 6) is associated with the rotor (1) and at least one sensor (3, 5) is associated with the fixed part.

23. Method for controlling a motor according to any one of claims 18 to 22 when dependent on claim 1, **characterised in that** it comprises the successive steps of:
- supplying the motor according to a predetermined time sequence so as to allow the rotation of the rotor (1) and thus that of the coder (2);
- detecting a first revolution pip pulse;
- determining the state of the commutation logic corresponding to the angular position of said pulse;
- sending commutation signals to the commutation circuit, said signals corresponding to the state determined;
- iteratively determining the subsequent states of the commutation logic from the position signals (A, B);
- sending commutation signals to the commutation circuit, said signals corresponding to the states determined.

24. Method for controlling a motor according to any one of claims 18 to 22 when dependent on claim 2, **characterised in that** it comprises the successive steps of:
- initially using the commutation signals (U, V, W) to determine the states of the commutation logic between the phases of the motor;
- detecting a first revolution pip pulse;
- determining the state of the commutation logic corresponding to the angular position of said pulse;
- sending commutation signals to the commutation circuit, said signals corresponding to the state determined;
- iteratively determining the subsequent states of the commutation logic from the position signals (A, B);
- sending commutation signals to the commutation circuit, said signals corresponding to the states determined.

25. Method according to claim 24, **characterised in that** it comprises an iterative step of comparing the position signals (A, B) and the revolution pip signals (C), so as to detect any possible anomaly and, if an anomaly is detected, of determining the subsequent commutation times from the commutation signals (U, V, W).

26. Method according to any one of claims 23 to 25, **characterised in that** it comprises a previous step of angularly indexing the revolution pip pulses relative to the changing of the electromotive forces in the phases of the motor to zero.
